# EUROPÄISCHE PATENTANMELDUNG

(11) **EP 2 530 323 A1**
(43) Veröffentlichungstag der Anmeldung: **05.12.2012**
(21) Anmeldenummer: 11168120.1
(22) Anmeldetag: 30.05.2011
(51) Int. Cl.: F04B 41/06, F04B 49/06, C10L 3/06, E21B 43/16, F04D 25/16, G05D 7/06

(54) **System zur Gewinnung und Weiterverarbeitung von Erdgas**

(71) Anmelder: SIEMENS AKTIENGESELLSCHAFT, 80333 München (DE)
(72) Erfinder: Blendinger, Stefan, 90762 Fürth (DE); Hanebuth, Marc, 22297 Hamburg (DE); Wacker, Bernd, 91074 Herzogenaurach (DE)

(57) **Zusammenfassung**

Die vorliegende Erfindung betrifft System zum Fördern von Erdgas aus einem Erdgasfeld. Ein erster Gaseinlass (111) eines ersten Kompressors (110) ist mit einer ersten Gasquelle (113) des Erdgasfeldes koppelbar, sodass ein erstes Erdgas aus der ersten Gasquelle (113) an dem ersten Gaseinlass (111) bereitstellbar ist. Ein erster Gasauslass (112) des ersten Kompressors (110) ist mit einer Sammelleitung (101) gekoppelt, sodass an dem ersten Gasauslass (112) das erste Erdgas mit einem ersten Ausgangsdruck und einem ersten Ausgangsmassenstrom bereitstellbar ist. Ein zweiter Gaseinlass (121) eines zweiten Kompressors (120) ist mit einer zweiten Gasquelle (123) des Erdgasfeldes koppelbar, sodass ein zweites Erdgas aus der zweiten Gasquelle (123) an dem zweiten Gaseinlass (121) bereitstellbar ist. Ein zweiter Gasauslass (122) des zweiten Kompressors (120) ist mit der Sammelleitung (101) gekoppelt, sodass an dem zweiten Gasauslass (122) das zweite Erdgas mit einem zweiten Ausgangsdruck und einem zweiten Ausgangsmassenstrom bereitstellbar ist. Eine Messeinrichtung (102) misst den ersten Ausgangsdruck, den ersten Ausgangsmassenstrom, den zweiten Ausgangsdruck, den zweiten Ausgangsmassenstrom, einen Gesamtdruck des Erdgases der Sammelleitung (101) und einen Gesamtmassenstrom des Erdgases in der Sammelleitung (101). Eine Steuereinrichtung (103) ist mit der Messeinrichtung (102), dem ersten Kompressor (110) und dem zweiten Kompressor (120) derart gekoppelt, dass mittels Steuerns des ersten Kompressors (110) und des zweiten Kompressors (120) in Abhängigkeit von dem ersten Ausgangsdruck, dem ersten Ausgangsmassenstrom, dem zweiten Ausgangsdruck und dem zweiten Ausgangsmassenstrom der Gesamtdruck und der Gesamtmassenstrom in der Sammelleitung (101) einstellbar sind.

## Beschreibung

### Technisches Gebiet

Die vorliegende Erfindung betrifft ein System zum Fördern von Erdgas aus einem Erdgasfeld und ein Verfahren zum Fördern von Erdgas aus einem Erdgasfeld.

### Hintergrund der Erfindung

Auf dem Gebiet der Erdgasförderung sind grundsätzlich konventionelle Erdgaslagerstätten und unkonventionelle Erdgaslagerstätten vorhanden.

In konventionellen Gaslagerstätten erfolgt die Förderung von Gas aus einem Erdgasfeld, welches einen kontinuierlich langsam abfallenden Druck liefert. Konventionelle Gaslagerstätten arbeiten beispielsweise mit sogenannten Joule-Thomson-Ventilen, um den Lagerstättendruck auf Pipelinedruck oder Oberflächenanlagen abzubauen. Die Förderung erfolgt kontinuierlich, wobei das Rohgas mit einer einfachen Druckregelung in eine Rohgasleitung eingespeist wird. Konventionelle Lagerstätten zeichnen sich dadurch aus, dass die Randschichten der Lagerstätten eine gute Durchlässigkeit zwischen den Porenräumen aufweisen. Erdgas aus der Lagerstätte kann durch den Lagerstättendruck teilweise von alleine zu einem Bohrloch fließen. Der Prozess der Oberflächenproduktion und Verarbeitung des Rohgases erfolgt bei konventionellem Erdgas meistens mit einem natürlichen Förderstättendruck.

Unkonventionelle Gaslagerstätten zeichnen sich dadurch aus, dass die Randschichten der Lagerschichten äußerst kleine Porenräume aufweisen, wobei die Porenräume zum Beispiel kleiner als 20% im Vergleich zu den Porenräumen von konventionellen Lagerstätten sind. Somit kann bei Gasentnahme aus unkonventionellen Lagerstätten ein Innendruck in der Lagerstätte nur schwer aufrechterhalten werden, so dass Gas nicht alleine zu dem Bohrloch fließt. Die Formationen von unkonventionellen Lagerstätten bestehen beispielsweise aus einem sogenannten Tight-Gas, Schiefergas (shale gas) oder Kohleflözgas (coal bed methane gas).

Daher ist es bei unkonventionellen Lagerstätten üblich die Förderung bei nicht mehr ausreichendem Druck mittels Kompressoren aufrecht zu erhalten. Anders als bei konventioneller Gasproduktion liefern unkonventionelle Gaslagerstätten zyklisch Rohgas, da der Druck bei Entnahme von Gas in der Lagerstätte zügig abfällt. Ferner hat das Rohgas, welches aus unkonventionellen Lagerstätten, neben einem kürzeren Förderzyklus eine außerordentlich differenzierte Qualität in Bezug auf die Anteile Feststoff, Flüssigkeit und Gas. Daher bestehen zudem bei unkonventionellen Lagerstätten besondere Anforderungen an die Gasreinigung, bevor es zum Transport in einer Pipeline oder zur Stromproduktion vor Ort übertragen werden kann.

Bei unkonventionellen Gaslagerstätten kann eine hydraulische Frakturierungsmethode angewandt werden, bei welcher eine stark bedruckte Flüssigkeit in den Innenraum der unkonventionellen Lagerstätte eingespeist wird, so dass die Randbereiche der Lagerstätte frakturiert bzw. gebrochen werden und damit kurzzeitig ein ausreichend hoher Druck zur Förderung des Gases erzeugt wird.

EP 2 217 983 A offenbart ein Verfahren zum Betrieb eines strömungstechnischen Leitungssystems, wie beispielsweise eines Schiffsrohrsystems mit einer aktiven Komponente, die in dem System einen Volumenstrom eines Mediums erzeugt, wobei mehrere zueinander parallel geschaltete Strömungskanäle von der aktiven Komponente gemeinsam mit dem erzeugten Volumenstrom des Mediums versorgt werden. Jeder Strömungskanal weist dabei einen individuellen Volumenstrombedarf des Mediums auf. Zusätzlich wird der von der aktiven Komponente erzeugte Volumenstrom insgesamt so geregelt, dass in zumindest einem der Strömungskanäle keine individuelle Drosselung des dortigen Volumenstroms erforderlich ist.

US 2008/027188 A1 offenbart einen Gaskompressor zur Erdgasförderung, um ein Erdgas mit einem geringen Druck in der Lagerstätte zu fördern.

WO 2010/098986 A2 offenbart ein Fördersystem für ein Erdgasfeld, wobei mittels eines mathematischen Modells eine Vorhersage über zukünftige Fördermengen des Erdgases berechnet und vorhergesagt werden können.

### Darstellung der Erfindung

Es ist eine Aufgabe der vorliegenden Erfindung, eine effiziente Förderung von Erdgas aus einem Erdgasfeld bereitzustellen.

Diese Aufgabe wird durch ein System zum Fördern von Erdgas aus einem Erdgasfeld und durch ein Verfahren zum Fördern von Erdgas aus einem Erdgasfeld gemäß den unabhängigen Ansprüchen gelöst.

Gemäß eines ersten Aspekts der vorliegenden Erfindung wird ein System zum Fördern von Erdgas aus einem Erdgasfeld beschrieben. Das System weist eine Sammelleitung, einen ersten Kompressor, einen zweiten Kompressor, eine Messeinrichtung und eine Steuereinrichtung auf. Der erste Kompressor weist einen ersten Gaseinlass und einen ersten Gasauslass auf. Der erste Gaseinlass ist mit einer ersten Gasquelle des Erdgasfeldes koppelbar, so dass ein erstes Erdgas, insbesondere aus der ersten Gasquelle, an dem ersten Gaseinlass bereitstellbar ist. Der erste Gasauslass ist mit der Sammelleitung gekoppelt, so dass an dem ersten Gasauslass das erste Erdgas mit einem ersten Ausgangsdruck und einem ersten Ausgangsmassenstrom bereitstellbar ist. Der zweite Kompressor weist einen zweiten Gaseinlass und einen zweiten Gasauslass auf. Der zweite Gaseinlass ist mit einer zweiten Gasquelle des Erdgasfeldes koppelbar, so dass ein zweites Erdgas aus der zweiten Gasquelle an dem zweiten Gaseinlass bereitstellbar ist. Der zweite Gasauslass ist mit der Sammelleitung koppelbar, so dass an dem zweiten Gasauslass das zweite Erdgas mit einem zweiten Ausgangsdruck und einem zweiten Ausgangsmassenstrom bereitstellbar ist.

Die Messeinrichtung misst den ersten Ausgangsdruck, den ersten Ausgangsmassenstrom, den zweiten Ausgangsdruck, den zweiten Ausgangsmassenstrom, einen Gesamtdruck des Erdgases in der Sammelleitung und einen Gesamtmassenstrom des Erdgases in der Sammelleitung. Die Steuereinrichtung ist mit der Messeinrichtung, dem ersten Kompressor und dem zweiten Kompressor derart gekoppelt, dass mittels Steuerns des ersten Kompressors und des zweiten Kompressors in Abhängigkeit von dem ersten Ausgangsdruck, dem ersten Ausgangsmassenstrom, dem zweiten Ausgangsdruck und dem zweiten Ausgangsmassenstrom der Gesamtdruck und der Gesamtmassenstrom in der Sammelleitung einstellbar sind.

Gemäß eines weiteren Aspekts der vorliegenden Erfindung wird ein Verfahren zum Fördern von Erdgas aus einem Erdgasfeld beschrieben. Ein erstes Erdgas aus einer ersten Gasquelle des Erdgasfeldes wird an einem ersten Gaseinlass eines ersten Kompressors bereitgestellt. Das erste Erdgas wird mit einem ersten Ausgangsdruck und einem ersten Ausgangsmassenstrom an einem ersten Gasauslass, welcher mit einer Sammelleitung gekoppelt ist, bereitgestellt. Ein zweites Erdgas aus einer zweiten Gasquelle des Erdgasfeldes wird an einem zweiten Gaseinlass eines zweiten Kompressors bereitgestellt. Das zweite Erdgas wird mit einem zweiten Ausgangsdruck und einem zweiten Ausgangsmassenstrom an einem zweiten Gasauslass des zweiten Kompressors, welcher mit der Sammelleitung gekoppelt ist, bereitgestellt.

Der erste Ausgangsdruck, der erste Ausgangsmassenstrom, der zweite Ausgangsdruck, der zweite Ausgangsmassenstrom, ein Gesamtdruck in der Sammelleitung und ein Gesamtmassenstrom in der Sammelleitung werden mittels einer Messeinrichtung gemessen. Der Gesamtdruck und der Gesamtmassenstrom in der Sammelleitung wird in Abhängigkeit von dem ersten Ausgangsdruck, dem ersten Ausgangsmassenstrom, dem zweiten Ausgangsdruck und dem zweiten Ausgangsmassenstrom mittels Steuerns des ersten Kompressors und des zweiten Kompressors durch eine Steuereinrichtung, welche mit der Messeinrichtung, dem zweiten Kompressor und dem zweiten Kompressor gekoppelt ist, eingestellt.

Das Erdgasfeld kann beispielsweise ein konventionelles Erdgasfeld (bzw. Lagerstätte) oder ein unkonventionelles Erdgasfeld (bzw. Lagerstätte) sein. An einem Erdgasfeld können beispielsweise eine Vielzahl von Gasquellen, wie beispielsweise die erste Gasquelle und die zweite Gasquelle, angeschlossen sein, um ein entsprechendes Erdgas zu fördern.

Die Gasquelle kann ein einzelnes Bohrloch aufweisen oder auch eine Mehrzahl von Bohrlöchern aufweisen. Häufig werden auf einem Bohrplatz ("Well Pad") mehrere, nah bei einander liegende Bohrlöcher (Wells) zu einer Gasquelle zusammengeschlossen und an einen entsprechenden Kompressor gekoppelt, wobei die Mehrzahl an zusammengeschlossenen Bohrlöchern dann eine Fördercharakteristik aufweist und die zusammengeschlossenen Bohrlöcher im Folgenden als Gasquelle angesehen werden. Die ersten und zweiten Gasquellen liegen in einem Erdgasfeld, wobei die Gasquellen einerseits getrennt voneinander vorliegen können, sodass jede Gasquelle Erdgas aus unterschiedlichen und getrennten Gasräumen des Erdgasfeldes fördern. Andererseits können die Gasquellen getrennt voneinander Erdgas fördern, wobei die Gasquellen Erdgas aus einem gemeinsamen Gasraum des Erdgasfeldes fördern.

Die Kompressoren, beispielsweise der erste Kompressor und der zweite Kompressor, erhalten das entsprechende erste oder zweite Erdgas aus dem Erdgasfeld mit einem Druck von ungefähr 1 bar bis 4 bar. Die Kompressoren sind ausgebildet, um das Erdgas beispielsweise auf einen Druckbereich zwischen ungefähren 5 bar bis ungefähr 20 bar zu erhöhen und in die Sammelleitung einzuspeisen.

Die Kompressoren (auch Wellhead-Kompressoren genannt) können als Schraubenverdichter mit einem Leistungsbereich bis ungefähr 2 MW ausgebildet sein. Ferner können ebenfalls Kolbenverdichter als Kompressoren eingesetzt werden. Diese Kompressorentypen erlauben, qualitativ relativ ungünstiges Erdgas zu fördern und sind in der Lage, bei niedrigen und stark schwankenden Eingangsdrücken zu fördern, um dennoch eine ausreichende Druckerhöhung zu erzeugen. Die Kompressoren sind beispielsweise verdrängende Kompressoren und können im Gegensatz zu beispielsweise Turbokompressoren eine drucksteifere Kennlinie und damit einen wesentlich breiteren Regelbereich für einen anliegenden Massenstrom bereitstellen.

An einem Erdgasfeld können eine Vielzahl von Bohrlöchern angeschlossen werden, wobei an jeder Gasquelle ein Kompressor anschließbar ist. Die jeweiligen Kompressoren können als mobile Einheiten ausgebildet sein, um flexibel zwischen Bohrlöchern ausgetauscht zu werden. Die Kompressoren sind somit als mobiles Equipment ausgestaltet und können flexibel nah an den Bohrlöchern postiert werden. Bei zeitlich begrenzten Förderzyklen von Erdgas aus einer Gasquelle können die Kompressoren bei Versiegen einer Gasquelle zügig zur nächsten Gasquelletransportiert und gekoppelt werden.

In dem System zum Fördern von Erdgas liefern der erste Kompressor und der zweite Kompressor an ihren Gasauslässen den ersten Ausgangsdruck, den ersten Ausgangsmassenstrom, den zweiten Ausgangsdruck und den zweiten Ausgangsmassenstrom. Die jeweiligen Ausgangsdrücke und Ausgangsmassenströme bilden zusammen in der Sammelleitung einen Gesamtdruck des Erdgases und einen Gesamtmassenstrom des Erdgases in der Sammelleitung. Der Gesamtmassenstrom ist die Summe aller an die Sammelleitung angeschlossenen Ausgangsmassenströme entsprechender Kompressoren.

Basierend auf dem weiteren Einsatz des Erdgases, beispielsweise in einer Gasaufbereitungsanlage oder in einem Pipeline-system, kann gemäß der vorliegenden Erfindung ein gewünschter Gesamtdruck und Gesamtmassenstrom in der Sammelleitung vorgegeben werden.

An die Sammelleitung sind alle Kompressoren angeschlossen. Der Gesamtmassenstrom in der Sammelleitung ergibt sich aus der Summe der jeweiligen Ausgangsmassenströme der einzelnen an die Sammelleitung angeschlossenen Kompressoren. Ferner beeinflussen die Ausgangsdrücke der jeweiligen Kompressoren den Gesamtdruck in der Sammelleitung.

Die Messeinrichtung weist eine Vielzahl von Drucksensoren und Durchflusssensoren auf, um an entsprechenden Stellen im System einen Gasdruck und einen Massenstrom des Erdgases zu messen. Die Messeinrichtung weist beispielsweise an den jeweiligen Gaseinlässen der Kompressoren und/oder an den jeweiligen Gasauslässen entsprechende Sensoren auf, um die entsprechenden Gasdrücke und Gasmassenströme zu messen. Ferner weist die Messeinrichtung beispielsweise Sensoren in der Sammelleitung auf, um ebenfalls den entsprechenden Gesamtdruck und Gesamtmassenstrom zu messen.

Die Steuereinrichtung ist mit der Messeinrichtung gekoppelt, um die Daten der gemessenen Gasdrücke und Massenströme des Erdgases von der Messeinrichtung zu erhalten. Die Steuereinrichtung ist eingerichtet, die gemessenen Messdaten der Gasdrücke und der Massenströme zu verarbeiten und daraus einen Bedarf an Gasdruck und Massenstrom von den entsprechenden Gasauslässen der entsprechenden Kompressoren zu ermitteln, um in der Sammelleitung einen gewünschten Gesamtdruck und Gesamtmassenstrom einzustellen.

Um den Gesamtdruck und Gesamtmassenstrom in der Sammelleitung einzustellen, ist die Steuereinrichtung mit den Kompressoren gekoppelt, so dass die Steuereinrichtung individuell die entsprechenden Kompressoren steuern kann. So kann die Steuereinrichtung beispielsweise die Drehzahlen der Wellen der entsprechenden Kompressoren steuern, um einen bestimmten Ausgangsdruck und Ausgangsmassenstrom an den entsprechenden Kompressoren einzustellen.

Somit ermöglicht die Steuereinrichtung eine gezielte Steuerung der Kompressoren, so dass bei abweichenden Ausgangsdrücken und Ausgangsmassenströmen an den entsprechenden Kompressoren individuell eingegriffen werden kann und somit mittels gezielter Steuerung der jeweiligen Kompressoren ein gewünschter und konstanter Gesamtdruck und Gesamtmassenstrom in der Sammelleitung erzeugt wird. Damit kann schnell auf Schwankungen des Förderdrucks und des Fördermassenstroms von Erdgas aus einer Gasquelle reagiert werden, so dass Druckschwankungen und Massenstromschwankungen in der Sammelleitung zügig kompensiert werden können.

Mit anderen Worten kann mittels operativem und aktivem Steuern der Kompressoren bei verschiedenen Betriebsbedingungen, wie beispielsweise bei stark variierenden Eingangsdrücken und Eingangsmassenströmen in die Kompressoren, ein hohes Maß an Kontinuität und Sicherheit des Gesamtmassenstroms und des Gesamtdrucks in der Sammelleitung erreicht werden, wodurch die Produktion und Förderung des Erdgases und die weitere Verarbeitung des Erdgases effizienter gestaltet werden kann. Insbesondere bei unkonventionellen Erdgasfeldern, welche einen inkonstanten Förderdruck und Fördermassenstrom des Erdgases aufweisen, kann ein kontinuierlicher Förderprozess ermöglicht werden. Die Kompressoren werden mittels der Steuereinrichtung sozusagen aktiv und parallel gesteuert, so dass die Steuereinrichtung eine übergreifende Steuerung und Regelung der Kompressoren umsetzt.

Wegen der übergeordneten Steuerung der Kompressoren durch die Steuereinrichtung kann zügig ein Ist-Zustand des von einem Kompressor gelieferten Gases getroffen werden, so dass der Massenstrom des geförderten Erdgases in die Sammelleitung annähernd konstant gehalten werden kann. Daraus kann eine Einspeisung des geförderten Erdgases in ein Pipelinesystem oder ein aus dem Erdgas produzierter Strom konstant gehalten und vorhergesagt werden. Gerade in liberalisierten Strom- und Gasmärkten ist dies ein wichtiger Faktor, da eine stark schwankende Nachfrage an Erdgas zügig nachjustiert werden kann. Ferner ermöglicht eine übergeordnete Steuerung der Kompressoren mittels der Steuereinrichtung eine energieoptimierte Gasproduktion.

Gemäß einer weiteren beispielhaften Ausführungsform misst die Messeinrichtung einen ersten Eingangsdruck und einen ersten Eingangsmassenstrom an dem ersten Gaseinlass. Ferner misst die Messeinrichtung einen zweiten Eingangsdruck und einen zweiten Eingangsmassenstrom an dem zweiten Gaseinlass. Die Steuereinrichtung ist mit der Messeinrichtung, dem ersten Kompressor und dem zweiten Kompressor derart gekoppelt, dass die Steuereinrichtung den ersten Kompressor und den zweiten Kompressor in Abhängigkeit von dem ersten Eingangsdruck, dem ersten Eingangsmassenstrom, dem zweiten Eingangsdruck und dem zweiten Eingangsmassenstrom steuert.

Aufgrund des Messens der jeweiligen Eingangsdrücke und Eingangsmassenströme der jeweiligen Kompressoren ermittelt die Steuereinrichtung den jeweiligen Arbeitspunkt des jeweiligen Kompressors, so dass dieser am effektivsten betreibbar ist. Der Arbeitspunkt eines Kompressors ist abhängig von dem Eingangsmassenstrom und dem Ausgangsmassenstrom, der Druckdifferenz zwischen dem Eingangsdruck und dem Ausgangsdruck sowie der Drehzahl des Kompressors. Die Steuereinrichtung kann beispielsweise die Drehzahl des jeweiligen Kompressors steuern, wobei bei der Wahl der Drehzahl einerseits die Massenströme und die Drücke berücksichtigt werden, um diesen Kompressor in der Nähe seines Arbeitspunktes zu betreiben, und andererseits den Bedarf an Ausgangsdruck und Ausgangsmassenstrom mit einbeziehen, um einen konstanten und vorgegebenen Gesamtmassenstrom und Gesamtdruck in der Sammelleitung zu erzielen.

Aufgrund der Einbeziehung der jeweiligen Eingangsdrücke, Eingangsmassenströme, der Ausgangsmassenströme, der Ausgangsdrücke und des gewünschten Gesamtdrucks und Gesamtmassenstroms in der Sammelleitung kann die Steuereinrichtung die Drehzahlen der jeweiligen Kompressoren derart steuern, dass jeder Kompressor am effektivsten, das heißt möglichst nahe an seinem Betriebspunkt arbeitet, so dass die Gesamteffektivität des Systems erhöht wird.

Gemäß einer weiteren beispielhaften Ausführungsform weist das System ferner ein erstes Ventil und ein zweites Ventil auf. Das erste Ventil (auch Wellhead-Controller genannt) ist zum Steuern des ersten Eingangsdrucks und des ersten Eingangsmassenstroms an den ersten Gaseinlass gekoppelt. Das zweite Ventil ist zum Steuern des zweiten Eingangsdrucks und des zweiten Eingangsmassenstroms an dem zweiten Gaseinlass gekoppelt. Die Steuereinrichtung ist mit dem ersten Ventil und dem zweiten Ventil derart gekoppelt, dass der erste Eingangsdruck, der zweite Eingangsmassenstrom, der zweite Eingangsdruck und der zweite Eingangsmassenstrom einstellbar sind. Der erste Wellhead-Controller (erstes Ventil) und der zweite Wellhead-Controller (zweites Ventil) sind mit anderen Worten zwischen dem jeweiligen Kompressor und der jeweiligen Gasquelle zwischengeschaltet. Dadurch lassen sich die Eingangsparameter eines entsprechenden Kompressors, wie beispielsweise der Eingangsdruck und der Eingangsmassenstrom, regulieren. Aus Gründen der Effektivität des Kompressors, zum Beispiel damit dieser an seinem Arbeitspunkt betreibbar ist, kann es nützlich sein, den Gasdruck aus der jeweiligen Gasquelle mittels eines jeweiligen Ventils zu drosseln und dem nach dem Ventil geschalteten Kompressor zuzuführen. Somit wird ebenfalls die Effektivität der Kompressoren und somit des Fördersystems erhöht.

Gemäß einer weiteren beispielhaften Ausführungsform weist das System ferner eine erste Umgehungsleitung (sog. Bypassleitung) mit einem ersten Umgehungsventil zum Steuern einer ersten Durchflussmenge des ersten Erdgases in der ersten Umgehungsleitung auf. Die erste Umgehungsleitung ist derart mit dem ersten Kompressor gekoppelt, dass zumindest ein Teil des ersten Erdgases von dem ersten Gaseinlass zu dem ersten Gasauslass beförderbar ist, ohne den ersten Kompressor zu durchströmen. Ferner weist das System eine zweite Umgehungsleitung mit einem zweiten Umgehungsventil zum Steuern einer zweiten Durchflussmenge des zweiten Erdgases in der zweiten Umgehungsleitung auf. Die zweite Umgehungsleitung ist derart mit dem zweiten Kompressor gekoppelt, dass zumindest ein Teil des zweiten Erdgases von dem zweiten Gaseinlass zu dem zweiten Gasauslass beförderbar ist, ohne den zweiten Kompressor zu durchströmen. Die Steuereinrichtung ist mit dem ersten Umgehungsventil und dem zweiten Umgehungsventil derart gekoppelt, dass in Abhängigkeit des ersten Eingangsdrucks, des zweiten Eingangsmassenstrom, des zweiten Eingangsdrucks und/oder des zweiten Eingangsmassenstroms die erste Durchflussmenge und/oder die zweite Durchflussmenge einstellbar sind.

Ist der entsprechende Eingangsdruck vor einem entsprechenden Kompressor höher als der von der übergeordneten Steuereinrichtung vorgegebene entsprechende Ausgangsdruck des entsprechenden Kompressors wird die entsprechende Umgehungsleitung mittels des entsprechenden Umgehungsventils geöffnet, sodass das Erdgase nicht durch den Kompressor strömt und weiter komprimiert wird. Die entsprechende Umgehungsleitung kann das gesamte Erdgas an dem entsprechenden Kompressor vorbeiführen die Steuereinrichtung den entsprechenden Kompressor deaktivieren.

Gemäß einer weiteren beispielhaften Ausführungsform weist das System eine Einspeisungsvorrichtung zum Einspeisen einer Flüssigkeit in die erste Gasquelle und/oder die zweite Gasquelle auf, um eine erste Innenwand der ersten Gasquelle und/oder eine zweite Innenwand der zweiten Gasquelle zu brechen. Die Steuereinrichtung steuert die Einspeisungsvorrichtung derart, dass die Einspeisungsvorrichtung bei einem ersten vorbestimmten Solleingangsdruck an dem ersten Gaseinlass und einen ersten vorbestimmten Solleingangsmassenstrom an dem ersten Gaseinlass die Flüssigkeit in die erste Gasquelle einspeist, und/oder wobei die Steuereinrichtung die Einspeisungsvorrichtung derart steuert, dass die Einspeisungsvorrichtung bei einem zweiten vorbestimmten Solleingangsdruck an dem zweiten Gaseinlass und einem zweiten vorbestimmten Solleingangsmassenstrom an dem zweiten Gaseinlass die Flüssigkeit in die zweite Gasquelle einspeist.

Die Einspeisungsvorrichtung dient zum sogenannten Frakturieren (fracturing), um insbesondere bei unkonventionellen Lagerstätten zyklisch einen Förderdruck zum Fördern des Erdgases bereitzustellen. Wegen der geringen Permeabilität der Innenwände bzw. der Randschichten der die entsprechende Gasquelle umgebenden Formationen wird nicht ausreichend Erdgas nachgeliefert, weshalb der Gasdruck in dem Erdgasfeld bei Förderung stark absinkt und nach kurzer Zeit eine Erdgasförderung zum Erliegen kommt. Mit dem sogenannten Fracturing-Verfahren wird mittels der Einspeisungsvorrichtung eine Flüssigkeit, wie beispielsweise eine Partikel beladene Wassersuspension, in die Gasquelle injiziert, um einen hydraulisch erzeugten Hochdruck in dem Erdgasfeld zu erzeugen, womit eine Frakturierung der Randschichten der Lagerstätte (Erdgasfeld) erzeugt wird. Die Randschichten des Erdgasfeldes werden frakturiert bzw. bekommen Risse, so dass die Permeabilität erhöht wird. Die in der Flüssigkeit (Suspension) enthaltenen feinen Partikel werden in die entstandenen Risse der Randschichten gespült und halten diese permeabel offen. Es entstehen kurzzeitig offenporige Randschichten, durch Gas nachgeführt werden kann, so dass der Druck in dem Erdgasfeld bei Förderung des Erdgases stabiler bleibt und langsamer absinkt. Somit kann dem Erdgasfeld weiter Erdgas entnommen werden, welches zunächst mit einem höheren Druck, welcher aber mit der Zeit stark abfällt, gefördert wird. Ferner wird das Erdgas als mit Flüssigkeit gesättigtes Erdgas, teilweise sogar mehrphasig, gefördert. Der Prozess der Erdgasförderung und der Frakturierung kann in jeder Gasquelle mehrmals wiederholt werden, bis sich das Erdgasfeld erschöpft hat, so dass sich die Förderung mangels Gasvolumen nicht mehr lohnt.

Die Steuereinrichtung aktiviert die Einspeisungsvorrichtung, falls der gemessene Eingangsdruck und der gemessene Eingangsmassenstrom unter den vorbestimmten ersten Solleingangsdruck oder Solleingangsmassenstrom fällt. Gleichzeitig deaktiviert die Steuereinrichtung den an der entsprechenden Gasquelle angeschlossenen Kompressor. Mittels der oben beschriebenen beispielhaften Ausführungsform aktiviert die Steuereinrichtung selbsttätig einen Frakturierungszyklus, so dass erneut ein ausreichender Förderdruck in der entsprechenden Gasquelle erzeugt wird. Ferner steuert die Steuereinrichtung die verbleibenden Kompressoren der anderen Bohrlöcher derart, dass in der Sammelleitung dennoch der gewünschte Gesamtmassenstrom und der gewünschte Gesamtdruck konstant bzw. auf dem gewünschten Niveau gehalten werden.

Zwischen der entsprechenden Gasquelle und dem entsprechenden Kompressor kann ferner eine Wasserabscheidevorrichtung (water treatment device) gekoppelt sein, um die für das Fracturing-Verfahren verwendete Flüssigkeit von dem Gas abzuscheiden. Die Flüssigkeit wird erneut für einen weiteren Einspeisezyklus der Einspeisungsvorrichtung zugeführt. Somit kann ein sogenanntes Close-Loop-Water-Cycling, bzw. ein geschlossener Flüssigkeitskreislauf, gewährleistet werden, so dass die möglicherweise kontaminierte Flüssigkeit nicht der weiteren Umwelt zugeführt werden muss.

Gemäß einer weiteren beispielhaften Ausführungsform misst die Messeinrichtung eine erste Qualität des ersten Erdgases aus der ersten Gasquelle an dem zweiten Gaseinlass und eine zweite Qualität des zweiten Erdgases aus der zweiten Gasquelle an dem zweiten Gaseinlass. Die Steuereinrichtung ist mit der Messeinrichtung, dem ersten Kompressor und dem zweiten Kompressor derart gekoppelt, dass die Steuereinrichtung den ersten Kompressor und den zweiten Kompressor in Abhängigkeit von der ersten Qualität und der zweiten Qualität steuert. Die erste Qualität und die zweite Qualität des Erdgases beschreiben bestimmte Kompositionen und Parameter des Erdgases, welche die Reinheit und die Zusammensetzung des Erdgases beschreiben. Unter der Qualität des Erdgases kann beispielsweise der Heizwert (Wobbe-Index), der Wassergehalt, der Gehalt an festen Bestandteilen, wie zum Beispiel Kohlendioxid, Sauerstoff, schwefelhaltigen Bestandteilen, Metallen und die Zusammensetzung an höherwertigen Kohlewasserstoffen (sog. Natural Gas Liquids, kurz: NGL) verstanden werden.

Neben dem Gesamtdruck und dem Gesamtmassenstrom in der Sammelleitung kann es für die an die Sammelleitung angeschlossenen weiterverarbeiteten Systeme, wie beispielsweise dem Pipeline-System, erforderlich sein, eine konstante Erdgasqualität einzuspeisen. Beispielsweise kann es notwendig sein, in die Pipeline ein Erdgas mit einem konstanten Heizwert und einem konstanten Wassergehalt einzuspeisen. Wird nun beispielsweise die erste Qualität eines ersten Erdgases aus der ersten Gasquelle und die zweite Qualität des zweiten Erdgases aus der zweiten Gasquelle gemessen, so kann festgestellt werden, welchen Wassergehalt und welchen Heizwert das jeweilig geförderte Gas hat. Die Steuereinrichtung kann nun mittels Steuerung des ersten Kompressors und des zweiten Kompressors eine entsprechende Fördermenge aus der ersten Gasquelle und der zweiten Gasquelle des Erdgases steuern, so dass sich in der Sammelleitung ein Mittel an Heizwert und Wassergehalt des Erdgases einstellt, welche einer vorgegebenen Sollqualität, bzw. einem Sollwassergehalt und einem Sollheizwert, des Erdgases in der Sammelleitung entspricht.

Somit wird neben der Effizienz auch die Qualität des Systems zum Fördern von Erdgas erhöht.

Ferner ist es notwendig, die Qualität des Erdgases, welches aus der entsprechenden Gasquelle dem entsprechenden Kompressor zugeführt wird, bestimmten Anforderungen entspricht, um Schäden an dem entsprechenden Kompressor zu vermeiden.

Gemäß einer weiteren beispielhaften Ausführungsform weist das System ferner eine Gasaufbereitungsanlage auf, welche zum Aufbereiten des Erdgases aus der Sammelleitung mit dieser gekoppelt ist. Die Gasaufbereitungsanlage weist einen Soll-eingangsdruck und einen Solleingangsmassenstrom auf. Die Steuereinrichtung steuert den Gesamtdruck und den Gesamtmassenstrom derart, dass der Gesamtdruck und der Gesamtmassenstrom mit dem Solleingangsdruck der Gasaufbereitungsanlage und dem Solleingangsmassenstrom der Gasaufbereitungsanlage übereinstimmen.

Die Gasaufbereitungsanlage dient dazu, beispielsweise Kohlendioxid, Wasser oder Schwefelverbindungen oder andere Verschmutzungen aus dem Erdgas zu trennen, so dass die Reinheit des Erdgases durch die Gasaufbereitungsanlage erhöht wird. Wird die Gasaufbereitungsanlage in ihrem Betriebspunkt, das heißt bei einem vorbestimmten Solleingangsdruck und einem Solleingangsmassenstrom des Erdgases betrieben, arbeitet die Gasaufbereitungsanlage effizienter. Mittels der Steuereinrichtung kann über eine Steuerung der Kompressoren der Soll-eingangsdruck und der Solleingangsmassenstrom eingestellt werden, so dass die hohe Effizienz der Gasaufbereitungsanlage erzielt wird.

Durch die gezielte Steuerung der einzelnen Kompressoren kann mittels der Steuereinrichtung gewährleistet werden, dass das Rohgas (Erdgas in der Sammelleitung) an die Gasreinigungs-und Trocknungsanlage (Gasaufbereitungsanlage) mit einem weitgehend gleichmäßigen und konstanten Druck und einem gleichmäßigen und konstanten Gesamtmassenstrom geliefert wird, so dass die Effizienz erhöht wird. Die Gasaufbereitungsanlage kann ferner mobil ausgebildet sein, so dass Module der Gasaufbereitungsanlage mittels Schwertransportern zu einem neuen Standort befördert werden können.

Gemäß einer weiteren beispielhaften Ausführungsform weist das System ferner einen Hochdruckkompressor auf, welcher mit der Sammelleitung gekoppelt ist. Der Hochdruckkompressor weist einen weiteren Solleingangsdruck und einen weiteren Solleingangsmassenstrom auf. Die Steuereinrichtung steuert den Gesamtdruck und den Gesamtmassenstrom derart, dass der Gesamtdruck und der Gesamtmassenstrom mit dem weiteren Solleingangsdruck und dem weiteren Solleingangsmassenstrom des Hochdruckkompressors übereinstimmen.

Der Hochdruckkompressor besteht beispielsweise aus einem Turbokompressor. Der Eingangsdruck an dem Hochdruckkompressor liegt nach Verdichtung in den Kompressoren beispielsweise zwischen ungefähr 5 bar und 20 bar. Der Hochdruckkompressor verdichtet das Erdgas auf einen Druck von ungefähr 60 bar bis 90 bar. In diesem Druckbereich kann das Erdgas äußerst effizient in ein angeschlossenes Pipelinesystem eingespeist werden. Der Hochdruckkompressor weist ebenfalls einen bereits in der Designphase des Hochdruckkompressors vorgegebenen Arbeitspunkt zu jeder vorgegebenen Drehzahl auf.

Der Arbeitspunkt richtet sich je nach Drehzahl nach dem Druckverhältnis zwischen dem Eingangsdruck und dem Ausgangsdruck des Hochdruckkompressors sowie des Eingangsmassenstroms und des Ausgangsmassenstroms des Hochdruckkompressors. Aufgrund der Regelung der Kompressoren mittels der Steuereinrichtung können ein Solleingangsdruck und ein weiterer Soll-eingangsmassenstrom an dem Eingang des Hochdruckkompressors in der Sammelleitung eingestellt werden, so dass der Hochdruckkompressor in der Nähe seines Arbeitspunktes und somit äußerst effizient arbeitet. Somit wird die Effizienz des Systems erhöht.

Wird dem Hochdruckkompressor beispielsweise ein unzureichender Massenstrom an Erdgas oder eine unzureichende Qualität zugeführt, kompensiert dies die Steuereinrichtung, indem die Förderung bei bestimmten Bohrlöchern gesteigert oder gedrosselt wird, insbesondere mittels Steuerung der ersten und zweiten Ventile oder mittels Steuerung der ersten und zweiten Kompressoren. Auf diese Weise kann sichergestellt werden, dass die Gasqualität und der Gasmassenstrom ohne zusätzliche technische Maßnahmen an die Anforderungen der Gasaufbereitungsanlage oder des Hochdruckkompressors angepasst bleiben oder werden.

Gemäß einer weiteren beispielhaften Ausführungsform weist das System ferner einen Stromgenerator zum Erzeugen von Strom auf. Der Stromgenerator ist mit der Sammelleitung derart gekoppelt, dass der Stromgenerator aus dem Erdgas der Sammelleitung Strom generiert. Der Stromgenerator ist mit dem ersten Kompressor und dem zweiten Kompressor gekoppelt, um dem ersten Kompressor und dem zweiten Kompressor den generierten Strom bereitzustellen.

Der Stromgenerator kann beispielsweise ausschließlich aufgrund der Strömungsenergie des Erdgases betrieben werden und somit ausschließlich eine Turbinenstufe aufweisen. Ferner kann der Stromgenerator eine Gasturbine sein, welche neben einer Turbinenstufe eine vorgeschaltete Brennkammer aufweist, in welcher das geförderte Erdgas verbrannt wird, um somit die thermische Energie zu erhöhen. Der Stromgenerator kann ferner für einen Stromexport an einem Stromnetz eingerichtet sein.

Gemäß einer weiteren beispielhaften Ausführungsform weist das System ferner einen weiteren Kompressor mit einem weiteren Gaseinlass und einem weiteren Gasauslass auf. Der weitere Gaseinlass ist mit einer weiteren Gasquelle des Erdgasfeldes koppelbar, so dass ein weiteres Erdgas aus der weiteren Gasquelle einem weiteren Gaseinlass bereitstellbar ist. Der weitere Gasauslass ist mit der Sammelleitung gekoppelt, so dass an dem weiteren Gasauslass das weitere Erdgas mit einem weiteren Ausgangsdruck und einem weiteren Ausgangsmassenstrom bereitstellbar ist. Die Messeinrichtung misst den weiteren Ausgangsdruck und den weiteren Ausgangsmassenstrom. Die Steuereinrichtung ist mit dem weiteren Kompressor derart gekoppelt, dass mittels Steuerns des ersten Kompressors, des zweiten Kompressors und des weiteren Kompressors ferner in Abhängigkeit von dem weiteren Ausgangsdruck und dem weiteren Ausgangsmassenstrom der Gesamtdruck und der Gesamtmassenstrom in der Sammelleitung einstellbar sind.

Mit den oben beschriebenen beispielhaften Ausführungsformen soll verdeutlicht werden, dass eine Vielzahl von weiteren Kompressoren, welche an entsprechenden weiteren Bohrlöchern gekoppelt sind, mit der Steuereinrichtung gesteuert werden können.

Zusammenfassend kann mit der Steuereinrichtung eine aktive Steuerung der Kompressoren ermöglicht werden, so dass die Förderung von Erdgas aus den Lagerstätten bzw. Erdgasfeldern beschleunigt wird. Darüber hinaus ist durch die intelligente Verschaltung der sich in verschiedenen Förderzuständen befindlichen Bohrlöcher mittels der Steuereinrichtung möglich, dass der Gasaufbereitungsanlage und des zentralen Hochdruckkompressors ein kontinuierlicher und nur gering fluktuierender Erdgasmassenstrom und Erdgasdruck zur Verfügung gestellt wird. Dadurch kann die verfahrenstechnische Gasaufbereitung sowie der Hochdruckkompressor immer nahe an dem Auslegungspunkt bzw. Arbeitspunkt mit hoher Effizienz arbeiten. Somit wird die Gesamteffizienz der Erdgasförderung erhöht und der Return on Investment beschleunigt.

Durch die übergeordnete Steuerung der Kompressoren mittels der Steuereinrichtung ist es auch möglich, eine Vorhersage der gelieferten Gasmenge zu treffen, so dass die Einspeisung des produzierten Erdgases in ein Pipelinesystem oder der produzierte Strom in das elektrische Netz vorhergesagt werden kann. Gerade liberalisierten Strom- und Gasmärkten ist dies ein entscheidender Faktor, um entsprechend die Nachfrage an Erdgas geregelt liefern zu können.

Die übergeordnete Steuerung der Kompressoren erlaubt ebenso eine energieoptimierte Gasproduktion, was insbesondere bei ferngelegenen Standorten wichtig ist, da die lokale mobile Stromversorgung höhere Kosten verursacht. Mittels des oben beschriebenen Systems und des Verfahrens zum Fördern von Erdgas wird die Erdgasförderung sowohl produktions- als auch energieverbrauchsoptimiert.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Figuren näher beschrieben.
Fig. 1 zeigt eine schematische Darstellung des Systems zum Fördern von Erdgas gemäß einer beispielhaften Ausführungsform; und
Fig. 2 zeigt ein Diagramm, in welchem verschiedene Produktionszyklen einer Gasquelle in einem unkonventionellen Gasfeld dargestellt sind.

Detaillierte Beschreibung von exemplarischen Ausführungsformen

Gleiche oder ähnliche Komponenten sind in den Figuren mit gleichen Bezugsziffern versehen. Die Darstellungen in den Figuren sind schematisch und nicht maßstäblich.

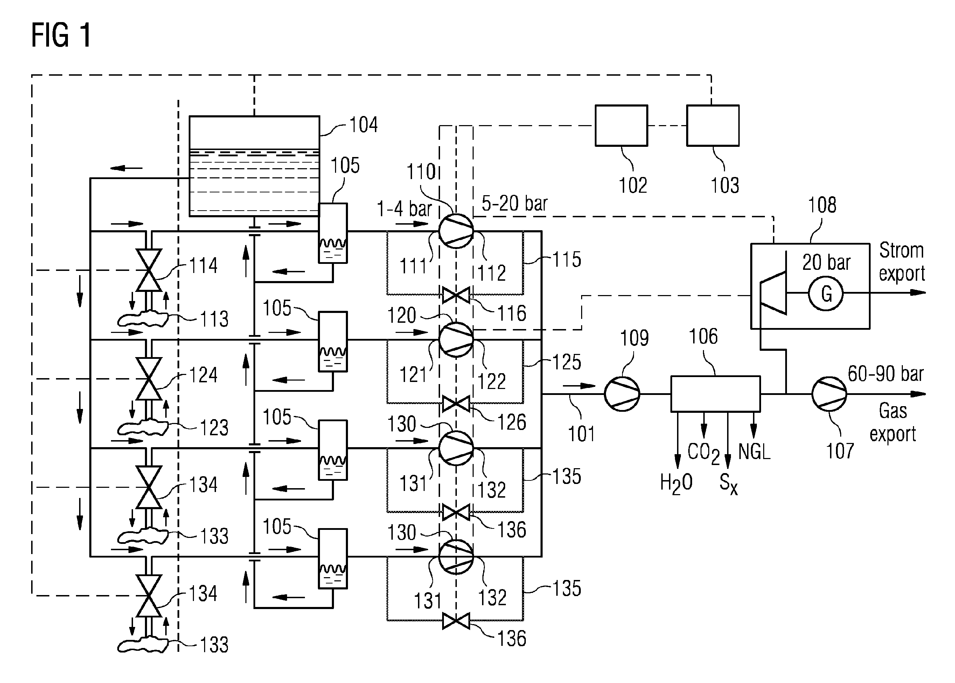

Fig. 1 zeigt ein System zum Fördern von Erdgas aus einem Erdgasfeld. Das System weist eine Sammelleitung 101, einen ersten Kompressor 110, einen zweiten Kompressor 120, eine Messeinrichtung 102 und eine Steuereinrichtung 103 auf. Der erste Kompressor 110 weist einen ersten Gaseinlass 111 und einen ersten Gasauslass 112 auf. Der erste Gaseinlass 111 ist mit einer ersten Gasquelle 113 des Erdgasfeldes koppelbar, so dass ein erstes Erdgas aus der ersten Gasquelle 113 an dem ersten Gaseinlass 111 bereitstellbar ist. Der erste Gasauslass 112 ist mit der Sammelleitung 101 gekoppelt, so dass an den ersten Gasauslass 112 das erste Erdgas mit einem ersten Ausgangsdruck und einem ersten Ausgangsmassenstrom bereitstellbar ist.

Der zweite Kompressor 120 weist einen zweiten Gaseinlass 121 und einen zweiten Gasauslass 122 auf. Der zweite Gaseinlass 121 ist mit einer zweiten Gasquelle 123 des Erdgasfeldes koppelbar, so dass ein zweites Erdgas aus der zweiten Gasquelle 123 an dem zweiten Gaseinlass 121 bereitstellbar ist. Der zweite Gasauslass 122 ist mit der Sammelleitung 101 gekoppelt, so dass an den zweiten Gasauslass 122 das zweite Erdgas mit einem zweiten Ausgangsdruck und einem zweiten Ausgangsmassenstrom bereitstellbar ist.

Die Messeinrichtung 102 misst den ersten Ausgangsdruck, den ersten Ausgangsmassenstrom, den zweiten Ausgangsdruck, den zweiten Ausgangsmassenstrom, einen Gesamtdruck des Erdgases in der Sammelleitung 101 und einen Gesamtmassenstrom des Erdgases in der Sammelleitung 101.

Die Steuereinrichtung 103 ist mit der Messeinrichtung 102, dem ersten Kompressor 110 und dem Kompressor 120 derart gekoppelt, dass mittels Steuerns des ersten Kompressors 110 und des zweiten Kompressors 120 in Abhängigkeit von dem ersten Ausgangsdruck, dem ersten Ausgangsmassenstrom, dem zweiten Ausgangsdruck und dem zweiten Ausgangsmassenstrom der Gesamtdruck und der Gesamtmassenstrom in der Sammelleitung 101 einstellbar sind. Neben den ersten und zweiten Kompressoren 110, 120 können eine Vielzahl weiterer Kompressoren 130 an entsprechende weitere Bohrlöcher 133 gekoppelt werden, wobei die Messeinrichtung 102 die jeweiligen Eingangs- und Ausgangsparameter der weiteren Kompressoren 130 misst und die Steuereinrichtung 103 die weiteren Kompressoren 130 steuert.

In Fig. 1 sind die Datenleitungen, entlang welcher Messdaten und Steuerdaten versendet werden, gestrichelt dargestellt. Die durchgezogenen Linien deuten Erdgasleitungen an.

Zwischen den jeweiligen Kompressoren 110, 120, 130 und den jeweiligen Bohrlöchern 113, 123, 133 können jeweils ein erstes Ventil 114, ein zweites Ventil 124 und ein entsprechendes weiteres Ventil 134 gekoppelt werden, so dass jedes der Ventile 114, 124, 134 einen entsprechenden Eingangsdruck und einen entsprechenden Eingangsmassenstrom an den entsprechenden Gaseinlässen 111, 121, 131 der jeweiligen Kompressoren 110, 120, 130 einstellen können. Die Ventile 114, 124, 134 werden mittels der Steuereinrichtung 103 gesteuert.

Zudem kann die Messeinrichtung 102 die entsprechenden Eingangsdrücke und Eingangsmassenströme an den entsprechenden Gaseinlässen 111, 121, 131 messen. Dadurch kann eine intelligente Steuerung der Kompressoren 110, 120, 130 mittels der Steuereinrichtung 103 ermöglicht werden, da jeder Kompressor 110, 120, 130 in der Nähe seines Arbeitspunktes betreibbar ist, um einen konstanten Gesamtmassenstrom und einen konstanten Gesamtdruck in der Sammelleitung 101 bereitzustellen.

Ferner zeigt Fig. 1 eine Einspeisungsvorrichtung (Fracturing-Vorrichtung), mit welcher das sogenannte Fracturing-Verfahren durchgeführt werden kann. Die Einspeisungsvorrichtung 104 enthält eine Flüssigkeit und eine Pumpe, welche die Flüssigkeit unter Druck in eine gezielt ausgewählte Gasquelle 113, 123, 133 einspeisen kann, um den Druck in der entsprechenden Gasquelle 113, 123, 133 zu erhöhen. Aus den frakturierten Bohrlöchern 113, 123, 133 wird vor den jeweiligen Kompressoren 110, 120, 130 ein entsprechender Flüssigkeitsabscheider 105 zwischengekoppelt, um die Flüssigkeit, welche durch die Einspeisungsvorrichtung 104 der entsprechenden Gasquelle 113, 123, 133 zugeführt wurde, zu trennen. Diese Flüssigkeit wird erneut zurück zu der Einspeisungsvorrichtung 104 zugeführt.

Die Steuereinrichtung 103 kann in Abhängigkeit der gemessenen Eingangsdrücke und Eingangsmassenströme an den jeweiligen Kompressoren 110, 120, 130 einen Frakturierungsvorgang automatisch starten und die Einspeisungsvorrichtung 104 steuern und aktivieren.

Aus einer entsprechenden Gasquelle 113, 123, 133 wird Erdgas beispielsweise in einem Druckbereich zwischen ungefähr 1 bar bis 4 bar gefördert und den jeweiligen Kompressoren 110, 120, 130 zugeführt. Falls ein gefördertes Erdgas einen zu hohen Druck aufweist, können die entsprechenden Ventile 114, 124, 134 beispielsweise den Eingangsmassenstrom reduzieren und dadurch ferner den Eingangsdruck an den jeweiligen Kompressoren 110, 120, 130 reduzieren. Jedes der Ventile 114, 124, 134 kann über die Steuereinrichtung 103 gesteuert werden. Damit können die Kompressoren 110, 120, 130 effizient in der Nähe ihres Betriebspunktes betrieben werden.

In Fig. 1 sind ferner entsprechende Umgehungleitungen 115, 125, 135 mit entsprechenden Umgehungsventilen 116, 126, 136 dargestellt. Die Umgehungsleitungen 115, 125, 135 sind derart mit einem entsprechenden Kompressor 110, 120, 130 gekoppelt, dass ein Teil des Erdgases von dem entsprechenden Gaseinlass 111, 121, 131 zu dem entsprechenden Gasauslass 112, 122, 132 beförderbar ist, ohne den entsprechenden Kompressor 110, 120, 130 zu durchströmen. Mittels der Umgehungsleitungen 115, 125, 135 können die entsprechenden Kompressoren 110, 120, 130 von zumindest einem Teil des entsprechenden Erdgases oder von dem gesamten Erdgas umgangen werden.

Die Steuereinrichtung 103 ist mit den entsprechenden Umgehungsventilen 116, 126, 136 derart gekoppelt, dass in Abhängigkeit der an den entsprechenden Kompressoren 110, 120, 130 anliegenden Eingangsdrücke und/oder anliegenden Eingangsmassenströme eine entsprechende Durchflussmenge des Erdgases durch die jeweiligen Umgehungsleitungen 115, 125, 135 einstellbar sind.

An die Sammelleitung 101 ist beispielsweise eine Gasaufbereitungsanlage 106 angeschlossen, welche dem geförderten Erdgas beispielsweise Wasser, Kohlendioxid (CO2), Schwefelverbindungen und höherwertige Kohlenwasserstoffe (sog. Natural Gas Liquids, kurz: NGL) entzieht, so dass ein reines Gas den weiteren angeschlossenen Einrichtungen zuführbar ist.

Nach der Gasreinigung kann beispielsweise ein Hochdruckkompressor 107 angeschlossen sein, welcher den Gasdruck beispielsweise auf ungefähr 60 bar bis 90 bar erhöht, um somit das Erdgas effizient z.B. in ein Pipelinesystem weiterzuführen. Ferner kann nach der Gasaufbereitungsanlage 106 das Erdgas dem Stromgenerator 108 zugeführt werden. Der Stromgenerator 108 kann beispielsweise bei ungefähr 20 bar arbeiten. Der Stromgenerator 108 weist beispielsweise eine Turbine auf, welche einen Generator antreibt, um Strom zu erzeugen.

Der Stromgenerator 108 kann ausschließlich mittels einer Turbine betrieben werden oder ferner mittels einer Gasturbine, das heißt mit einer vor der Turbinenstufe vorgeschalteten Brennstufe, in welcher das Erdgas verbrannt wird, aufweisen.

Der erzeugte Strom kann ausschließlich zum Betrieb der jeweiligen Kompressoren 110, 120, 130 verwendet werden und/oder zum weiteren Stromexport, beispielsweise zur Einspeisung in ein Stromnetz, verwendet werden.

Hilfsweise kann ebenfalls ein Hilfskompressor bzw. ein Zwischenverdichter 109 der Gasaufbereitungsanlage 106 in der Sammelleitung 101 vorgeschaltet werden. Der Zwischenverdichter 109 kann ebenfalls mittels der Steuereinrichtung 103 gesteuert werden.

Die Einspeisungsvorrichtung 104, der Flüssigkeitsabscheider 105 sowie die Kompressoren 110, 120, 130 können als mobile Vorrichtungen ausgebildet sein, um flexibel an verschiedene Bohrlöcher 113, 123, 133 angekoppelt zu werden. Nach Versiegen einer Gasquelle113, 123, 133 kann die entsprechende mobile Vorrichtung zu einer neu erschlossenen weiteren Gasquelle 133 befördert und angeschlossen werden.

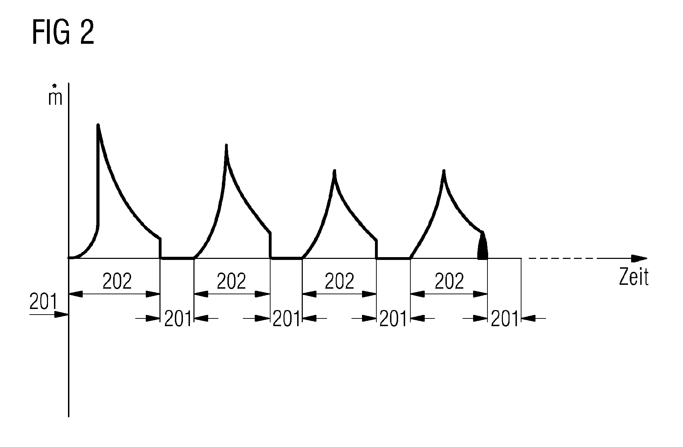

Fig. 2 zeigt einen Förderzyklus einer Gasquelle 113, 123, 133 eines unkonventionellen Erdgasfeldes. Entlang der Zeitachse sind Einspeisungszyklen 201 dargestellt. Während dieser Einspeisungszyklen 201 wird kein Erdgas gefördert. In diesen Einspeisungszyklen 201 wird mittels der Einspeisungsvorrichtung 104 eine Flüssigkeit in die entsprechende Gasquelle 113, 123, 133 eingespeist, bis ein entsprechender Druck vorherrscht. Nach den Einspeisungszyklen 201 sind jeweils die Förderzyklen 202 dargestellt. Die Förderzyklen weisen jeweils zu Beginn einen hohen Massenstrom (ṁ) an Erdgas auf, wobei sehr zügig der förderbare Massenstrom des Erdgases abfällt. Ab einem gewissen minimalen Massenstrom wird der Förderzyklus 202 unterbrochen und ein erneuter Einspeisungszyklus 201 vorgenommen. Die Förderzyklen 202 in Fig. 2 verdeutlichen, dass jede Gasquelle 113, 123, 133 zeitlich äußerst unterschiedliche und voneinander verschiedene Massenströme bzw. Fördermengen an Erdgas den jeweiligen Kompressoren 110, 120, 130 bereitstellt. Die Messeinrichtung 102 und die Steuereinrichtung 103 ermöglichen, dass die jeweiligen aktuellen Fördermassenströme und Förderdrücke des Erdgases aus einer entsprechenden Gasquelle 113, 123, 133 erkannt werden, wobei durch eine intelligente Steuerung der jeweiligen Kompressoren 110, 120, 130 mittels der Steuereinrichtung 103 jeder Kompressor 110, 120, 130 effizient arbeitet und zugleich ein gewünschter (z.B. konstanter) Gesamtdruck und ein gewünschter Gesamtmassenstrom in der Sammelleitung 101 generiert wird.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. System zum Fördern von Erdgas aus einem Erdgasfeld, das System aufweisend
eine Sammelleitung (101),
einen ersten Kompressor (110) mit einem ersten Gaseinlass (111) und einem ersten Gasauslass (112),
wobei der erste Gaseinlass (111) mit einer ersten Gasquelle (113) des Erdgasfeldes koppelbar ist, sodass ein erstes Erdgas aus der ersten Gasquelle (113) an dem ersten Gaseinlass (111) bereitstellbar ist, und
wobei der erste Gasauslass (112) mit der Sammelleitung (101) gekoppelt ist, sodass an dem ersten Gasauslass (112) das erste Erdgas mit einem ersten Ausgangsdruck und einem ersten Ausgangsmassenstrom bereitstellbar ist,
einen zweiten Kompressor (120) mit einem zweiten Gaseinlass (121) und einem zweiten Gasauslass (122),
wobei der zweite Gaseinlass (121) mit einer zweiten Gasquelle (123) des Erdgasfeldes koppelbar ist, sodass ein zweites Erdgas aus der zweiten Gasquelle (123) an dem zweiten Gaseinlass (121) bereitstellbar ist, und
wobei der zweite Gasauslass (122) mit der Sammelleitung (101) gekoppelt ist, sodass an dem zweiten Gasauslass (122) das zweite Erdgas mit einem zweiten Ausgangsdruck und einem zweiten Ausgangsmassenstrom bereitstellbar ist,
eine Messeinrichtung (102), welche den ersten Ausgangsdruck, den ersten Ausgangsmassenstrom, den zweiten Ausgangsdruck, den zweiten Ausgangsmassenstrom, einen Gesamtdruck des Erdgases in der Sammelleitung (101) und einen Gesamtmassenstrom des Erdgases in der Sammelleitung (101) misst, und
eine Steuereinrichtung (103), welche mit der Messeinrichtung (102), dem ersten Kompressor (110) und dem zweiten Kompressor (120) derart gekoppelt ist, dass mittels Steuerns des ersten Kompressors (110) und des zweiten Kompressors (120) in Abhängigkeit von dem ersten Ausgangsdruck, dem ersten Ausgangsmassenstrom, dem zweiten Ausgangsdruck und dem zweiten Ausgangsmassenstrom der Gesamtdruck und der Gesamtmassenstrom in der Sammelleitung (101) einstellbar sind.

2. System gemäß Anspruch 1,
wobei die Messeinrichtung (102) einen ersten Eingangsdruck und einen ersten Eingangsmassenstrom an dem ersten Gaseinlass (111) misst, und
wobei die Messeinrichtung (102) einen zweiten Eingangsdruck und einen zweiten Eingangsmassenstrom an dem zweiten Gaseinlass (121) misst,
wobei die Steuereinrichtung (103) mit der Messeinrichtung (102), dem ersten Kompressor (110) und dem zweiten Kompressor (120) derart gekoppelt ist, dass die Steuereinrichtung (103) den ersten Kompressor (110) und den zweiten Kompressor (120) in Abhängigkeit von dem ersten Eingangsdruck, dem ersten Eingangsmassenstrom, dem zweiten Eingangsdruck und dem zweiten Eingangsmassenstrom steuert.

3. System gemäß Anspruch 2, ferner aufweisend
ein erstes Ventil (114), welches zum Steuern des ersten Eingangsdrucks und des ersten Eingangsmassenstroms an dem ersten Gaseinlass (111) gekoppelt ist, und
ein zweites Ventil (124), welches zum Steuern des zweiten Eingangsdrucks und des zweiten Eingangsmassenstroms an dem zweiten Gaseinlass (121) gekoppelt ist,
wobei die Steuereinrichtung (103) mit dem ersten Ventil (114) und dem zweiten Ventil (124) derart gekoppelt ist, dass der erste Eingangsdruck, der zweite Eingangsmassenstrom, der zweite Eingangsdruck und der zweite Eingangsmassenstrom einstellbar sind.

4. System gemäß Anspruch 2 oder 3, ferner aufweisend
eine erste Umgehungsleitung (115) mit einem ersten Umgehungsventil (116) zum Steuern einer ersten Durchflussmenge des ersten Erdgases in der ersten Umgehungsleitung (115), wobei die erste Umgehungsleitung (115) derart mit dem ersten Kompressor (110) gekoppelt ist, dass zumindest ein Teil des ersten Erdgases von dem ersten Gaseinlass (111) zu dem ersten Gasauslass (112) beförderbar ist, ohne den ersten Kompressor (110) zu durchströmen, und
eine zweite Umgehungsleitung (125) mit einem zweiten Umgehungsventil (126) zum Steuern einer zweiten Durchflussmenge des zweiten Erdgases in der zweiten Umgehungsleitung (125), wobei die zweite Umgehungsleitung (125) derart mit dem zweiten Kompressor (120) gekoppelt ist, dass zumindest ein Teil des zweiten Erdgases von dem zweiten Gaseinlass (121) zu dem zweiten Gasauslass (122) beförderbar ist, ohne den zweiten Kompressor (120) zu durchströmen,
wobei die Steuereinrichtung (103) mit dem ersten Umgehungsventil (116) und dem zweiten Umgehungsventil (126) derart gekoppelt ist, dass in Abhängigkeit des ersten Eingangsdrucks, des zweiten Eingangsmassenstrom, des zweiten Eingangsdrucka und/oder des zweiten Eingangsmassenstroms die erste Durchflussmenge und/oder die zweite Durchflussmenge einstellbar sind.

5. System gemäß einem der Ansprüche 2 bis 4, ferner aufweisend
eine Einspeisungsvorrichtung (104) zum Einspeisen einer Flüssigkeit in die erste Gasquelle (113) und/oder die zweite Gasquelle (123), um eine erste Innenwandwand der ersten Gasquelle (113) und/oder eine zweite Innenwand der zweiten Gasquelle (123) zu brechen,
wobei die Steuereinrichtung (103) die Einspeisungsvorrichtung (104) derart steuert, dass die Einspeisungsvorrichtung (104) bei einem ersten vorbestimmten Soll-Eingangsdruck an dem ersten Gaseinlass (111) und einem ersten vorbestimmten Soll-Eingangsmassenstrom an dem ersten Gaseinlass (111) die Flüssigkeit in die erste Gasquelle (113) einspeist, und/oder
wobei die Steuereinrichtung (103) die Einspeisungsvorrichtung (104) derart steuert, dass die Einspeisungsvorrichtung (104) bei einem zweiten vorbestimmten Soll-Eingangsdruck an dem zweiten Gaseinlass (121) und einem zweiten vorbestimmten Soll-Eingangsmassenstrom an dem zweiten Gaseinlass (121) die Flüssigkeit in die zweite Gasquelle (123) einspeist.

6. System gemäß einem der Ansprüche 1 bis 5,
wobei die Messeinrichtung (102) eine erste Qualität des ersten Erdgases aus der ersten Gasquelle (113) an dem ersten Gaseinlass (111) und eine zweite Qualität des zweiten Erdgases aus der zweiten Gasquelle (123) an dem zweiten Gaseinlass (121) misst,
wobei die Steuereinrichtung (103) mit der Messeinrichtung (102), dem ersten Kompressor (110) und dem zweiten Kompressor (120) derart gekoppelt ist, dass die Steuereinrichtung (103) den ersten Kompressor (110) und den zweiten Kompressor (120) in Abhängigkeit von der ersten Qualität und der zweiten Qualität steuert.

7. System gemäß einem der Ansprüche 1 bis 6, ferner aufweisend
eine Gasaufbereitungsanlage (106), welche zum Aufbereiten des Erdgases aus der Sammelleitung (101) mit dieser gekoppelt ist,
wobei die Gasaufbereitungsanlage (106) einen Soll-Eingangsdruck und einen Soll-Eingangsmassenstrom aufweist,
wobei die Steuereinrichtung (103) den Gesamtdruck und den Gesamtmassenstrom derart steuert, dass der Gesamtdruck und der Gesamtmassenstrom mit dem Soll-Eingangsdruck der Gasaufbereitungsanlage (106) und dem Soll-Eingangsmassenstrom der Gasaufbereitungsanlage (106) übereinstimmen.

8. System gemäß einem der Ansprüche 1 bis 7, ferner aufweisend
einen Hochdruckkompressor(107), welcher mit der Sammelleitung (101) gekoppelt ist,
wobei der Hochdruckkompressor(107) einen weiteren Soll-Eingangsdruck und einen weiteren Soll-Eingangsmassenstrom aufweist,
wobei die Steuereinrichtung (103) den Gesamtdruck und den Gesamtmassenstrom derart steuert, dass der Gesamtdruck und der Gesamtmassenstrom mit dem weiteren Soll-Eingangsdruck und dem weiteren Soll-Eingangsmassenstrom des Hochdruckkompressors (107) übereinstimmen.

9. System gemäß einem der Ansprüche 1 bis 8, ferner aufweisend
einen Stromgenerator (108) zum Erzeugen von Strom,
wobei der Stromgenerator (108) mit der Sammelleitung (101) derart gekoppelt ist, dass der Stromgenerator (108) aus dem Erdgas der Sammelleitung (101) Strom generiert,
wobei der Stromgenerator (108) mit dem ersten Kompressor (110) und dem zweiten Kompressor (120) gekoppelt ist, um dem ersten Kompressor (110) und dem zweiten Kompressor (120) den generierten Strom bereitzustellen.

10. System gemäß einem der Ansprüche 1 bis 9, ferner aufweisend
einen weiteren Kompressor (130) mit einem weiteren Gaseinlass (131) und einem weiteren Gasauslass (132),
wobei der weitere Gaseinlass mit einer weiteren Gasquelle (133) des Erdgasfeldes koppelbar ist, sodass ein weiteres Erdgas aus der weiteren Gasquelle (133) an dem weiteren Gaseinlass (131) bereitstellbar ist, und
wobei der weitere Gasauslass mit der Sammelleitung (101) gekoppelt ist, sodass an dem weiteren Gasauslass (132) das weitere Erdgas mit einem weiteren Ausgangsdruck und einem weiteren Ausgangsmassenstrom bereitstellbar ist,
wobei die Messeinrichtung (102) den weiteren Ausgangsdruck und den weiteren Ausgangsmassenstrom misst, und
wobei die Steuereinrichtung (103) ferner mit dem weiteren Kompressor (130) derart gekoppelt ist, dass mittels Steuerns des ersten Kompressors (110), des zweiten Kompressors (120) und des weiteren Kompressors (130) ferner in Abhängigkeit von dem weiteren Ausgangsdruck und dem weiteren Ausgangsmassenstrom der Gesamtdruck und der Gesamtmassenstrom in der Sammelleitung (101) einstellbar sind.

11. Verfahren zum Fördern von Erdgas aus einem Erdgasfeld, das Verfahren aufweisend
Bereitstellen eines ersten Erdgases aus einer ersten Gasquelle (113) des Erdgasfeldes an einem ersten Gaseinlass (111) eines ersten Kompressors (110),
Bereitstellen des ersten Erdgases mit einem ersten Ausgangsdruck und einem ersten Ausgangsmassenstrom an einem ersten Gasauslass (112) des ersten Kompressors (110), welcher mit einer Sammelleitung (101) gekoppelt ist,
Bereitstellen eines zweiten Erdgases aus einer zweiten Gasquelle (123) des Erdgasfeldes an einem zweiten Gaseinlass (121) eines zweiten Kompressors (120),
Bereitstellen des zweiten Erdgases mit einem zweiten Ausgangsdruck und einem zweiten Ausgangsmassenstrom an einem zweiten Gasauslass (122) des zweiten Kompressors (120), welcher mit der Sammelleitung (101) gekoppelt ist,
Messen des ersten Ausgangsdrucks, des ersten Ausgangsmassenstroms, des zweiten Ausgangsdrucks, des zweiten Ausgangsmassenstroms, eines Gesamtdrucks in der Sammelleitung (101) und eines Gesamtmassenstroms in der Sammelleitung (101) mittels einer Messeinrichtung (102), und
Einstellen des Gesamtdrucks und des Gesamtmassenstroms in der Sammelleitung (101) in Abhängigkeit von dem ersten Ausgangsdruck, dem ersten Ausgangsmassenstrom, dem zweiten Ausgangsdruck und dem zweiten Ausgangsmassenstrom mittels Steuerns des ersten Kompressors (110) und des zweiten Kompressors (120) durch eine Steuereinrichtung (103), welche mit der Messeinrichtung (102), dem ersten Kompressor (110) und dem zweiten Kompressor (120) gekoppelt ist.
